# EUROPEAN PATENT APPLICATION

(11) **EP 2 801 597 A1**
(43) Date of publication of application: **12.11.2014**
(21) Application number: 12864241.0
(22) Date of filing: 20.12.2012
(51) Int. Cl.: C09J 7/02, B32B 27/00, C09J 201/00

(54) **ADHESIVE TAPE FOR PREVENTING AQUATIC BIOFOULING**

(30) Priority: 06.01.2012 JP 2012000932; 06.01.2012 JP 2012000933; 06.01.2012 JP 2012000935
(71) Applicant: Nitto Denko Corporation, Ibaraki-shi, Osaka 567-8680 (JP)
(72) Inventor: SUZUKI, Satoru, Ibaraki-shi Osaka 567-8680 (JP); NAITO, Tomonari, Ibaraki-shi Osaka 567-8680 (JP); SUEYOSHI, Taiki, Ibaraki-shi Osaka 567-8680 (JP); KURATA, Naoki, Ibaraki-shi Osaka 567-8680 (JP)
(74) Representative: Müller-Boré & Partner Patentanwälte PartG mbB
(86) International application number: PCT/JP2012/083057
(87) International publication number: WO 2013/103092

(57) **Abstract**

Provided is a pressure-sensitive adhesive tape for preventing adhesion of aquatic organisms excellent in impact resistance and capable of preventing damage to or loss of its antifouling layer due to a colliding object. A pressure-sensitive adhesive tape for preventing adhesion of aquatic organisms of the present invention includes an antifouling layer, a base material layer, and a pressure-sensitive adhesive layer in the stated order, in which the base material layer has an impact absorption rate of 10% or more.

## Description

### Technical Field

The present invention relates toapressure-sensitiveadhesive tape for preventing adhesion of aquatic organisms. More specifically, the present invention relates to a pressure-sensitive adhesive tape for preventing adhesion of aquatic organisms for preventing aquatic organisms from adhering to an underwater structure (such as a ship, a buoy, a harbor facility, a maritime oil field facility, a waterway for power plant cooling water, a waterway for factory cooling water, or a water floating passage) to proliferate.

### Background Art

A marine organism such as a barnacle, an oyster, a blue mussel, a hydra, a serpula, a sea squirt, a moss animal, a sea lettuce, green laver, or attached diatom has been adhering to a portion of an underwater structure such as a ship in contact with seawater to proliferate, thereby causing an unpreferred state such as a reduction in facility mechanical performance, e.g., an increase in fluid resistance or a reduction in thermal conductivity, or diffusion of the adhering marine organism to overseas. In addition, an operation of removing the adhering marine organism requires a great deal of labor and an enormous amount of time, which results in economic loss.

Hitherto, the underwater structure has been painted with an antifouling paint in order that such damage as described above may be prevented. The antifouling paint contains a toxic antifouling agent, which, for example, was formerly an organotin compound and is currently cuprous oxide. Although adhesion and growth of the marine organism can be suppressed almost completely by the toxicity of the antifouling paint, the toxic antifouling agent such as the organotin compound or cuprous oxide causes a serious problem in the long run because the agent adversely affects a human body or an environment to no small extent. In addition, when the antifouling paint is dried after its painting, about 30 wt% of an organic solvent (VOC) volatilizes to adversely affect a work environment or a surrounding environment. In spray-type painting, in addition to discharge of the VOC to the atmosphere, 10 wt% to 20 wt% of the paint is said to be scattered to the surroundings by the wind. Meanwhile, when the structure painted with the antifouling paint that has been used for many years is repainted with a new one, the antifouling paint that has become old is peeled with a sandblast or a metal grinder. At that time, however, a large amount of coating film pieces each containing the toxic antifouling agent such as the organotin compound or cuprous oxide are scattered to the surroundings to adversely affect an operator or the environment. In addition, the peeled antifouling paint is treated as industrial waste. Accordingly, the paint has been causing a major problem.

A sheet-shaped tape obtained by providing a silicone elastomer on a base material through an undercoating agent and providing a pressure-sensitive adhesive layer on the opposite side of the base material has been proposed as an antifouling tape having an antifouling effect without using any antifouling paint (see Patent Literature 1). However, its antifouling layer is poor in mechanical strength. Accordingly, for example, when an object collides with the antifouling tape applied to the underwater structure under a use condition in a fluid, a problem such as damage to or loss of the antifouling layer arises.

### Citation List

### Patent Literature

[PTL 1] JP 2002-69246 A

### Summary of Invention

### Technical Problem

An object of the present invention is to provide a pressure-sensitive adhesive tape for preventing adhesion of aquatic organisms excellent in impact resistance and capable of preventing damage to or loss of its antifouling layer due to a colliding object.

### Solution to Problem

A pressure-sensitive adhesive tape for preventing adhesion of aquatic organisms of the present invention includes anantifouling layer, a base material layer, and a pressure-sensitive adhesive layer in the stated order, in which the base material layer has an impact absorption rate of 10% or more.

In a preferred embodiment, the base material layer contains an elastomer resin.

In a preferred embodiment, the elastomer resin includes at least one kind selected from a urethane-based elastomer and a styrene-based elastomer.

In a preferred embodiment, the antifouling layer contains a silicone resin.

### Advantageous Effects of Invention

According to one embodiment of the present invention, it is possible to provide the pressure-sensitive adhesive tape for preventing adhesion of aquatic organisms excellent in impact resistance and capable of preventing damage to or loss of its antifouling layer due to a colliding object.

### Brief Description of Drawings

FIG. 1 is a schematic sectional view of an example of a pressure-sensitive adhesive tape for preventing adhesion of aquatic organisms of the present invention.
FIG. **2** is a photographic view showing a state of a pressure-sensitive adhesive tape (1) obtained in Example 1 after an iron ball drop test.
FIG. **3** is a photographic view showing a state of a pressure-sensitive adhesive tape (4) obtained in Example 4 after an iron ball drop test.
FIG. **4** is a photographic view showing a state of a pressure-sensitive adhesive tape (C1) obtained in Comparative Example 1 after an iron ball drop test.
FIG. **5** is a photographic view showing a state of a pressure-sensitive adhesive tape (C2) obtained in Comparative Example 2 after an iron ball drop test.
FIG. **6** is a schematic view illustrating an apparatus to be used for measuring an impact force.

### Description of Embodiments

A pressure-sensitive adhesive tape for preventing adhesion of aquatic organisms of the present invention includes anantifouling layer, a base material layer, and a pressure-sensitive adhesive layer in the stated order. The pressure-sensitive adhesive tape for preventing adhesion of aquatic organisms of the present invention may include any appropriate other layer to the extent that the effect of the present invention is not impaired as long as the tape includes the antifouling layer, the base material layer, and the pressure-sensitive adhesive layer in the stated order. The thickness of the pressure-sensitive adhesive tape for preventing adhesion of aquatic organisms of the present invention is set to any appropriate thickness depending on the thickness of each layer in the tape to the extent that the effect of the present invention is not impaired. The thickness of the pressure-sensitive adhesive tape for preventing adhesion of aquatic organisms of the present invention is preferably from 50 µm to 300 µm.

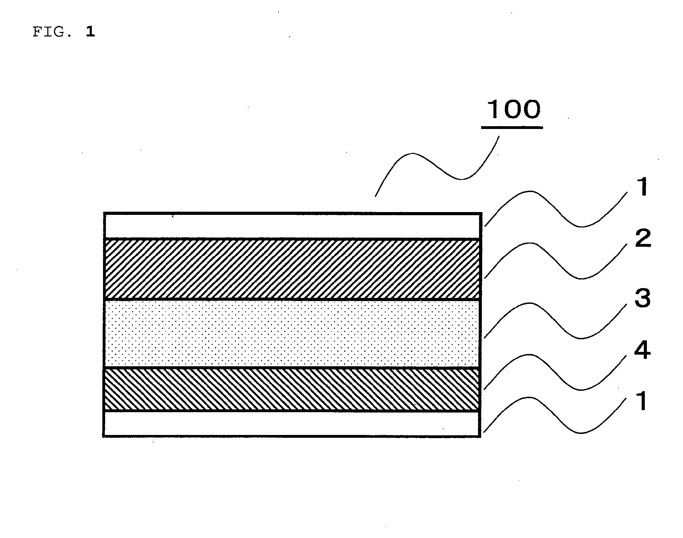

FIG. **1** illustrates a schematic sectional view of an example of the pressure-sensitive adhesive tape for preventing adhesion of aquatic organisms of the present invention. Apressure-sensitive adhesive tape **100** for preventing adhesion of aquatic organisms of the present invention includes an anti fouling layer **2 ,** a base material layer **3,** and a pressure-sensitive adhesive layer **4** in the stated order. As illustrated in FIG. **1****,** the surface of the antifouling layer **2** or the surface of the pressure-sensitive adhesive layer **4** may be provided with a release film **1.**

The base material layer has an impact absorption rate of 10% or more, preferably 15% or more, more preferably 20% or more, still more preferably 25% or more, particularly preferably 30% or more, most preferably 35% or more. When the impact absorption rate of the base material layer falls within the range, a pressure-sensitive adhesive tape for preventing adhesion of aquatic organisms excellent in impact resistance and capable of preventing damage to or loss of its antifouling layer due to a colliding object can be provided.

A base material layer formed of any appropriate material may be adopted as the base material layer as long as its impact absorption rate is 10% or more. Such base material layer preferably contains an elastomer resin. Any appropriate elastomer resin may be adopted as the elastomer resin to the extent that the effect of the present invention is not impaired. Examples of such elastomer resin include a vulcanized rubber and a thermoplastic elastomer. Examples of the thermoplastic elastomer include a styrene-based elastomer, an olefin-based elastomer, a vinyl chloride-based elastomer, a urethane-based elastomer, an ester-based elastomer, and an amide-based elastomer. When the base material layer contains the elastomer resin, the content of the elastomer resin in the base material layer is preferably 50 wt% or more, more preferably from 60 wt% to 100 wt%, still more preferably from 70 wt% to 99 wt%, particularly preferably from 80 wt% to 98 wt%, most preferably from 90 wt% to 97 wt%.

When the base material layer contains the elastomer resin, the number of kinds of the elastomer resins in the base material layer may be only one, or may be two or more. When the base material layer contains the elastomer resin, a pressure-sensitive adhesive tape for preventing adhesion of aquatic organisms additionally excellent in impact resistance and capable of preventing damage to or loss of its antifouling layer due to a colliding object can be provided.

When the base layer contains the elastomer resin, the elastomer resin is preferably at least one kind selected from a urethane-based elastomer and a styrene-based elastomer. Examples of the urethane-based elastomer include ester-based polyurethane, ether-based polyurethane, and a polyurethane acrylic resin. Examples of the styrene-based elastomer include: an A-B type diblock polymer such as a styrene/butadiene copolymer (SB), a styrene/isoprene copolymer (SI), a styrene/ethylene-butylene copolymer (SEB), or a styrene/ethylene-propylene copolymer (SEP); a multiblock polymer of an A-B-A type triblock, an A-B-A-B type tetrablock, or a higher block such as a styrene/butadiene/styrene copolymer (SBS), a styrene/isoprene/styrene copolymer (SIS), a styrene/ethylene-butylene copolymer/styrene copolymer (SEBS), or a styrene/ethylene-propylene copolymer/styrene (SEPS); a styrene-based random copolymer such as a styrene/butadiene rubber copolymer (SBR); and an A-B-C type styrene/olefin crystal-based block polymer such as a styrene/ethylene-butylene copolymer/olefin crystal (SEBC). The adoption of at least one kind selected from the urethane-based elastomer and the styrene-based elastomer as the elastomer resin can provide a pressure-sensitive adhesive tape for preventing adhesion of aquatic organisms additionally excellent in impact resistance and capable of preventing damage to or loss of its antifouling layer due to a colliding object.

The polyurethane acrylic resin has an acrylic component and a urethane component. The polyurethane acrylic resin is more specifically a composite polymer containing a (meth) acrylic polymer and a urethane polymer. A weight ratio "(meth)acrylic polymer/urethane polymer" of the (meth)acrylic polymer to the urethane polymer in the polyurethane acrylic resin is preferably from 1/99 to 80/20. When the ratio "(meth) acrylic polymer/urethane polymer" is less than 1/99, the viscosity of a precursor mixture may increase to deteriorate workability. When the ratio exceeds 80/20, the flexibility or strength of the polyurethane acrylic resin may not be obtained.

It should be noted that the term "(meth)acryl" as used in the present invention means "acryl" and/or "methacryl."

The (meth)acrylic polymer in the polyurethane acrylic resin is preferably a polymer obtained by using monomer components containing a (meth) acrylic acid-based monomer and a monofunctional (meth)acrylic monomer. The (meth)acrylic polymer in the polyurethane acrylic resin is particularly preferably a polymer obtained by using monomer components containing a monofunctional (meth)acrylic monomer whose homopolymer has a glass transition temperature (Tg) of 0°C or more. The (meth) acrylic polymer in the polyurethane acrylic resin is more preferably a polymer obtained by using monomer components further containing a monofunctional

(meth)acrylic monomer whose homopolymer has a glass transition temperature (Tg) of less than 0°C in addition to the monofunctional (meth)acrylic monomer whose homopolymer has a glass transition temperature (Tg) of 0°C or more.

The (meth)acrylic acid-based monomer means a (meth)acrylic monomer having a carboxyl group. Examples of the (meth)acrylic acid-based monomer include acrylic acid, methacrylic acid, maleic acid, and crotonic acid. The (meth) acrylic acid-based monomer is preferably, for example, acrylic acid because the effect of the present invention can be additionally expressed.

The content of the (meth)acrylic acid-based monomer in the monomer components serving as raw materials for the polyurethane acrylic resin is preferably from 1 to 15 wt%, more preferably from 2 to 10 wt%. When the content of the (meth) acrylic acid-basedmonomer in the monomer components serving as the raw materials for the polyurethane acrylic resin is less than 1 wt%, a reaction for synthesizing the polyurethane acrylic resin may require a long time period or the polyurethane acrylic resin may not have a sufficient strength. When the content of the (meth) acrylic acid-based monomer in the monomer components serving as the raw materials for the polyurethane acrylic resin exceeds 15 wt%, the coefficient of water absorption of the polyurethane acrylic resin may increase to cause a problem in terms of its water resistance. The (meth)acrylic acid-based monomer largely affects compatibility between the urethane component and acrylic component in the polyurethane acrylic resin.

Examples of the monofunctional (meth)acrylic monomer having a Tg of 0°C or more include acryloylmorpholine, isobornyl acrylate, dicyclopentanyl acrylate, t-butyl acrylate, cyclohexyl acrylate, and lauryl acrylate. The number of kinds of the monofunctional (meth) acrylic monomers each having a Tg of 0°C or more may be only one, or may be two or more.

The monofunctional (meth) acrylic monomer having a Tg of 0°C or more is preferably at least one kind selected from acryloylmorpholine, isobornyl acrylate, and dicyclopentanyl acrylate because the effect of the present invention can be additionally expressed, and the monomer is more preferably, for example, isobornyl acrylate.

The content of themonofunctional (meth) acrylic monomer having a Tg of 0°C or more in the (meth) acrylic polymer in the polyurethane acrylic resin is preferably from 20 wt% to 99 wt%, more preferably from 30 wt% to 98 wt%. When the content of the monofunctional (meth) acrylic monomer having a Tg of 0°C or more in the (meth) acrylic polymer in the polyurethane acrylic resin is less than 20 wt%, the polyurethane acrylic resin may not have a sufficient strength. When the content of the monofunctional (meth)acrylic monomer having a Tg of 0°C or more in the (meth) acrylic polymer in the polyurethane acrylic resin exceeds 99 wt%, the rigidity of the polyurethane acrylic resin may rise so much that the resin becomes brittle.

Examples of the monofunctional (meth)acrylic monomer having aTgof less than 0°C includen-butyl acrylate, 2-ethylhexyl acrylate, isooctyl acrylate, isobutyl acrylate, 2-methoxyethyl acrylate, tetrahydrofluorofuryl acrylate, phenoxyethyl acrylate, ethoxyethyl acrylate, and 3-methoxybutyl acrylate. The number of kinds of the monofunctional (meth)acrylic monomers each having a Tg of less than 0°C may be only one, or may be two or more.

The monofunctional (meth) acrylic monomer having a Tg of less than 0°C is preferably, for example, n-butyl acrylate because the effect of the present invention can be additionally expressed.

The content of the monofunctional (meth)acrylic monomer having a Tg of less than 0°C in the (meth) acrylic polymer in the polyurethane acrylic resin is preferably 50 wt% or less, more preferably 45 wt% or less. When the content of the monofunctional (meth)acrylic monomer having a Tg of less than 0°C in the (meth) acrylic polymer in the polyurethane acrylic resin exceeds 50 wt%, the polyurethane acrylic resin may not have a sufficient strength.

The kinds, combination, usages, and the like of the (meth) acrylic monomers such as the (meth) acrylic acid-based monomer and monofunctional (meth)acrylic monomer in the raw material monomers for the (meth) acrylic polymer in the polyurethane acrylic resin are appropriately determined in consideration of compatibility with urethane, polymerizability at the time of photocuring with a radiation or the like, and the characteristics of a polymer to be obtained.

The raw material monomers for the (meth)acrylic polymer in the polyurethane acrylic resin may contain any appropriate other monomer to the extent that the effect of the present invention is not impaired. Examples of such other monomer include vinyl acetate, vinyl propionate, styrene, acrylamide, methacrylamide, a mono- or diester of maleic acid and a derivative thereof, N-methylolacrylamide, glycidyl acrylate, glycidyl methacrylate, N,N-dimethylaminoethyl acrylate, N,N-dimethylaminopropylmethacrylamide, 2-hydroxypropyl acrylate, N,N-dimethylacrylamide, N,N-diethylacrylamide, an imide acrylate, N-vinylpyrrolidone, oligoester acrylate, ε-caprolactone acrylate, dicyclopentanyl (meth)acrylate, dicyclopentenyl (meth)acrylate, methoxylated cyclododecatriene acrylate, andmethoxyethyl acrylate. The number of kinds of the other monomers may be only one, or may be two or more. The kinds and usages of the other monomers may be appropriately selected depending on purposes.

The raw material monomers for the (meth) acrylic polymer in the polyurethane acrylic resin may contain any other polyfunctional monomer to the extent that the effect of the present invention is not impaired. Examples of such polyfunctional monomer include ethylene glycol di(meth)acrylate, propylene glycol di(meth)acrylate, hexanediol di(meth)acrylate, neopentyl glycol di(meth)acrylate, trimethylolpropane tri(meth)acrylate, pentaerythritol tri(meth)acrylate, dipentaerythritol hexa(meth)acrylate, urethane acrylate, epoxy acrylate, and polyester acrylate. Such polyfunctional monomer is preferably, for example, trimethylolpropane tri(meth)acrylate because the effect of the present invention can be additionally expressed.

When the raw material monomers for the (meth) acrylic polymer in the polyurethane acrylic resin contain the other polyfunctional monomer, its content is preferably from 1 wt% to 20 wt% with respect to the (meth) acrylic monomers in the raw material monomers. When the content is 1 wt% or more, the cohesive strength of the polyurethane acrylic resin can be maintained at a sufficiently high level. When the content is 20 wt% or less, the modulus of elasticity of the polyurethane acrylic resin does not become excessively high, and hence the tape is excellent in impact resistance and can satisfactorily follow the unevenness of the surface of an adherend.

The urethane polymer in the polyurethane acrylic resin is preferably obtained by causing a diol and a diisocyanate to react with each other. A catalyst may be used for a reaction between a hydroxyl group of the diol and the isocyanate.

As a low-molecular weight diol, there are given, for example, dihydric alcohols such as ethylene glycol, diethylene glycol, propylene glycol, butylene glycol, and hexamethylene glycol.

As a high-molecular weight diol, there are given, for example: polyether polyolobtained bysubjecting,for example, ethylene oxide, propylene oxide, or tetrahydrofuran to addition polymerization; polyester polyol formed of a polycondensate of an alcohol such as the above-mentioned dihydric alcohol, 1,4-butanediol, or 1, 6-hexanediol and a dibasic acid such as adipic acid, azelaic acid, or sebacic acid; acrylic polyol; carbonate polyol; epoxy polyol; and caprolactone polyol. Of those, polyoxytetramethylene glycol (PTMG) or polyalkylene carbonate diol (PCD) is a preferred example of the high-molecular weight diol because the effect of the present invention can be additionally expressed.

The acrylic polyol is, for example, a copolymer of a hydroxyl group-containing substance and a (meth) acrylic monomer as well as a copolymer of monomers each having a hydroxyl group.

The epoxy polyol is, for example, an amine-modified epoxy resin.

In the production of the urethane polymer in the polyurethane acrylic resin, only one kind of the diols may be used, or two or more kinds thereof may be used in consideration of, for example, solubility in the (meth)acrylic monomers and reactivity with the isocyanate. Increasing a urethane hard segment amount based on the low-molecular weight diol is effective in improving the strength of the polyurethane acrylic resin. When importance is placed on the elongation of the polyurethane acrylic resin, it is effective to use a diol having a large molecular weight alone. In general, the polyether polyol is inexpensive and has good water resistance. The polyester polyol can improve the strength of the polyurethane acrylic resin.

Examples of the diisocyanate include: aromatic, aliphatic, and alicyclic diisocyanates; dimers and trimers of those diisocyanates; and polyphenylmethane diisocyanate. The number of kinds of the diisocyanates may be only one, or may be two or more.

Examples of the aromatic, aliphatic, and alicyclic diisocyanates include tolylene diisocyanate, diphenylmethane diisocyanate, hexamethylene diisocyanate, xylylene diisocyanate, hydrogenatedxylylene diisocyanate (HXDI), isophorone diisocyanate, hydrogenated diphenylmethane diisocyanate, 1,5-naphthylene diisocyanate, 1,3-phenylene diisocyanate, 1,4-phenylene diisocyanate, butane-1,4-diisocyanate, 2,2,4-trimethylhexamethylene diisocyanate, 2,4,4-trimethylhexamethylene diisocyanate, cyclohexane-1,4-diisocyanate, dicyclohexylmethane-4,4-diisocyanate, 1,3-bis(isocyanatomethyl)cyclohexane, methylcyclohexane diisocyanate, and m-tetramethylxylylene diisocyanate.

Examples of the trimers of the aromatic, aliphatic, and alicyclic diisocyanates include isocyanurate-type, biuret-type, and allophanate-type trimers.

The diisocyanate is preferably, for example, hexamethylene diisocyanate (HDI), hydrogenated tolylene diisocyanate (HTDI), hydrogenated 4,4-diphenylmethane diisocyanate (HMDI), isophorone diisocyanate (IPDI), or hydrogenated xylylene diisocyanate (HXDI) because the effect of the present invention can be additionally expressed.

With regard to a use ratio between the diol component and diisocyanate component for forming the urethane polymer, a ratio "NCO/OH" (equivalent ratio) is preferably from 1.1 to 2.0, more preferably from 1.15 to 1.35. When the ratio "NCO/OH" (equivalent ratio) is less than 1.1, the strength of the polyurethane acrylic resinmayreduce. When the ratio "NCO/OH" (equivalent ratio) exceeds 2.0, it may be impossible to sufficiently secure the elongation and flexibility of the polyurethane acrylic resin.

A hydroxyl group-containing (meth)acrylic monomer may be added to the urethane polymer. The addition of the hydroxyl group-containing (meth)acrylic monomer to the urethane polymer enables the introduction of a (meth)acryloyl group to a molecular terminal of a urethane prepolymer, imparts copolymerizability with the (meth)acrylic monomers, improves compatibility between the urethane component and the acrylic component, and can achieve improvements in S-S characteristics such as a rupture strength. The usage of the hydroxyl group-containing (meth)acrylic monomer is preferably from 0.1 wt% to 10 wt%, more preferably from 1 wt% to 5 wt% with respect to the urethane polymer because the effect of the present invention can be additionally expressed.

Examples of the hydroxy group-containing (meth)acrylic monomer include hydroxyethyl (meth)acrylate, hydroxypropyl (meth)acrylate, hydroxybutyl (meth)acrylate, and hydroxyhexyl (meth)acrylate.

The polyurethane acrylic resin preferably has a heterogeneous network structure in which the (meth) acrylic polymer and the urethane polymer are bonded to each other by a graft structure or a cross-linked structure. In the case of an IPN structure (interpenetrating polymer network layer) in which the (meth) acrylic polymer and the urethane polymer each independently have a cross-linked structure, or a semi-IPN structure in which one of the (meth)acrylic polymer and the urethane polymer has a cross-linked structure, and the other has a polymer chainof a linear structure topenetrate the cross-linked structure, a stress at the time of the extension of the polyurethane acrylic resin may be hardly expressed.

When the base material layer contains the polyurethane acrylic resin as the elastomer resin in itself, the base material layer can be formed, for example, by: performing the reaction between the diol and the diisocyanate in the (meth) acrylic monomers by using the (meth) acrylic monomers as a diluent to form the urethane polymer; applying a mixture containing the (meth)acrylic monomers and the urethane polymer as main components onto a base material or the like (subjected to release treatment as required); irradiating the mixture with an ionizing radiation such as an α-ray, a β-ray, a γ-ray, a neutron beam, or an electron beam, a radiation such as UV light, visible light, or the like in accordance with the kind and the like of a photopolymerization initiator to cure the mixture; and peeling and removing the base material or the like after the curing. Alternatively, the base material layer can be obtained in a form in which the base material layer is laminated on the base material or the like instead of the peeling and removal of the base material or the like.

When the base material layer contains the polyurethane acrylic resin as the elastomer resin in itself, the base material layer can be obtained more specifically, for example, by: dissolving the diol in the (meth) acrylic monomers; adding the diisocyanate or the like to the solution to perform a reaction with the diol to adjust the viscosity of the solution; applying the solution to a support or the like, or as required, a release-treated surface of the support or the like; and curing the applied solution with a low-pressure mercury lamp or the like. In the method, during urethane synthesis, the (meth) acrylic monomers may be added in one portion, or may be added in several portions. In addition, the diol may be caused to react after the diisocyanate has been dissolved in the (meth) acrylic monomers. According to the method, the molecular weight of urethane to be finally obtained can be designed to any appropriate magnitude because the molecular weight is not limited and a high-molecular weight polyurethane can be produced. In order that polymerization inhibition by oxygen may be avoided, oxygen may be blocked by placing a release-treated sheet (such as a separator) on the mixture applied onto the support or the like, or an oxygen concentration may be reduced by placing the base material in a container filled with an inert gas.

The kind of the radiation or the like, the kind of the lamp to be used in the irradiation, and the like may be appropriately selected. Examples of such lamp include: low-pressure lamps such as a fluorescent chemical lamp, a black light, and a bactericidal lamp; and high-pressure lamps such as a metal halide lamp and a high-pressure mercury lamp.

The dose of UV light or the like may be appropriately set depending on the characteristics of the base material layer. In general, the dose of UV light is preferably from 100 mJ/cm² to 5, 000 mJ/cm², more preferably from 1,000 mJ/cm² to 4,000 mJ/cm², still more preferably from 2,000 mJ/cm² to 3,000 mJ/cm². A dose of UV light of less than 100 mJ/cm² may make it impossible to obtain a sufficient polymerization rate, and a dose of more than 5, 000 mJ/cm² may be responsible for the deterioration of the base material layer. A temperature upon irradiation with UV light or the like may be set to any appropriate temperature depending on purposes. When the temperature upon irradiation with UV light or the like is excessively high, a termination reaction due to heat of polymerization is liable to occur, which is liable to be responsible for the reduction of the characteristics. Accordingly, the temperature upon irradiation with UV light or the like is preferably 70°C or less, more preferably 50°C or less, still more preferably 30°C or less.

In the preparation of the polyurethane acrylic resin, a mixture containing at least the urethane polymer (such as the mixture containing the (meth)acrylic monomers and the urethane polymer as main components) preferably contains a photopolymerization initiator.

Examples of the photopolymerization initiator include: a benzoin ether such as benzoin methyl ether or benzoin isopropyl ether; a substituted benzoin ether such as anisole methyl ether; a substituted acetophenone such as 2,2-diethoxyacetophenone or 2,2-dimethoxy-2-phenylacetophenone; a substituted α-ketol such as 1-hydroxycyclohexyl phenyl ketone, 2-methyl-2-hydroxypropiophenone; an aromatic sulfonyl chloride such as 2-naphthalenesulfonyl chloride; and a photoactive oxime such as 1-phenyl-1,1-propanedione-2-(o-ethoxycarbonyl)-oxime.

The base material layer may contain any appropriate additive to the extent that the effect of the present invention is not impaired. Examples of such additive include an olefin-based resin, a silicone-based polymer, a liquid acrylic copolymer, a tackifier, an antioxidant, a hindered amine-based light stabilizer, a UV absorbing agent, an antioxidizing agent, an antistatic agent, polyethylene imine, a fatty acid amide, a fatty acid ester, a phosphoric acid ester, a lubricant, a surfactant, a filler, and a pigment (such as calcium oxide, magnesium oxide, silica, zinc oxide, titanium oxide, or carbon black).

The base material layer preferably contains a UV absorbing agent. When the base material layer contains the UV absorbing agent, the weatherability of the pressure-sensitive adhesive tape for preventing adhesion of aquatic organisms of the present invention improves. When the base material layer does not contain any UV absorbing agent, the base material is liable to deteriorate owing to sunlight in outdoor use and hence it may become difficult to maintain the original base material strength. In addition, when the base material deteriorates, the base material layer is frequently cut upon peeling of the pressure-sensitive adhesive tape for preventing adhesion of aquatic organisms of the present invention that has already been used from an adherend, and hence working efficiency may remarkably deteriorate.

Any appropriate thickness may be adopted as the thickness of the base material layer depending on purposes. The thickness of the base material layer is preferably from 1 µm to 1,000 µm, more preferably from 10 µm to 800 µm, still more preferably from 20 µm to 500 µm. When the thickness of the base material layer is set to fall within the range, the pressure-sensitive adhesive tape for preventing adhesion of aquatic organisms of the present invention can be easily bonded to a site except a flat surface such as a curved surface or an acute angle surface with good workability, and an external appearance failure such as a wrinkle or floating hardly occurs in its surface after the bonding.

A primer may be applied to the base material layer in advance or a silane coupling agent may be added to the layer in advance in order that its adhesiveness with the antifouling layer may be improved. When the antifouling layer contains a silicone resin, its adhesiveness with the base material layer may be low owing to low surface energy as a characteristic of the silicone resin. When the adhesiveness between the antifouling layer and the base material layer is low, the antifouling layer that exhibits an antifouling effect peels from the base material layer owing to impact or physical damage during use, and hence it may be impossible to maintain its original antifouling effect. Accordingly, the primer can be applied to the surface of the base material layer in advance to improve the adhesiveness with the antifouling layer, or a silanol group or alkoxysilane group that reacts with the silicone resin can be introduced into the base material layer by the silane coupling agent and subjected to a condensation reaction with a reactive group on the base material layer at the time of the application of a condensation-type silicone resin to improve the adhesiveness.

The number of the kinds of the silane coupling agents may be only one, or may be two or more. As a specific silane coupling agent that is commercially available, there are given, for example, KBM5103, KBM1003, KBM903, KBM403, and KBM802 manufactured by Shin-Etsu Chemical Co., Ltd.

When the base material layer contains the silane coupling agent, the content of the silane coupling agent in the base material layer is preferably from 0.01 wt% to 10 wt%. When the content of the silane coupling agent in the base material layer exceeds 10 wt%, the silane coupling agent may serve as a cross-linking point to make the base material layer hard. When the content of the silane coupling agent in the base material layer is less than 0.01 wt%, sufficient adhesiveness may not be expressed between the base material layer and the antifouling layer.

Any appropriate layer may be adopted as the antifouling layer as long as the layer can express an antifouling effect.

The antifouling layer is preferably a layer capable of expressing an antifouling effect without using any antifouling paint, and for example, any appropriate resin having an antifouling effect is used as a material for the layer. Such resin is preferably, for example, a silicone resin.

When the antifouling layer contains the silicone resin, any appropriate content may be adopted as the content of the silicone resin in the antifouling layer depending on the content of any other component such as an antifouling agent. When the antifouling layer contains the silicone resin, the content of the silicone resin in the antifouling layer is preferably from 30 wt% to 98 wt%, more preferably from 40 wt% to 97 wt%, still more preferably from 45 wt% to 96 wt%, particularly preferably from 50 wt% to 95 wt%. When the content of the silicone resin in the antifouling layer is less than 30 wt%, the mechanical characteristics of the antifouling layer may reduce. When the content of the silicone resin in the antifouling layer exceeds 98 wt%, the antifouling layer may be unable to sufficiently express its antifouling effect.

Any appropriate silicone resin may be adopted as the silicone resin to the extent that the effect of the present invention is not impaired. The number of kinds of the silicone resins may be only one, or may be two or more. Such silicone resin may be a silicone resin that is liquid at normal temperature, or may be a silicone resin that is solidatnormal temperature. Inaddition, suchsilicone resin may be a one-component silicone resin to be dried alone, or may be a two-component silicone resin to be compounded with a curing agent. In the present invention, of those, a one-component and room temperature-curable (RTV) resin or a two-component and room temperature-curable (RTV) resin is preferred. Examples of the one-component RTV resin include KE-3475, KE-45S, KE-445, KE-44, KE-441, KE-3497, and KE-4896 manufactured by Shin-Etsu Chemical Co., Ltd. Examples of the two-component RTV resin include KE-66, KE-1031, and KE-1800 manufactured by Shin-Etsu Chemical Co., Ltd.

In order that easy removability of an aquatic organism in the pressure-sensitive adhesive tape for preventing adhesion of aquatic organisms of the present invention may be improved, the silicone resin is preferably a silicone resin having the following physical property: the surface of the resin undergoes elastic deformation by virtue of, for example, a water pressure at the time of the removal of the organism by water washing to facilitate the peeling of an adhering substance. Such silicone resin has a 100% modulus (tensile stress) of preferably from 0.1 MPa to 10 MPa, more preferably from 0.1 MPa to 6 MPa. In addition, such silicone resin is preferably soluble in an organic solvent.

The antifouling layer may contain an antifouling agent. The number of kinds of the antifouling agents may be only one, or may be two or more. When the antifouling layer contains the antifouling agent, the antifouling agent can express an action of maintaining its high antifouling effect for a long time period because of the following reasons: the agent migrates to the surface of the silicone resin as a matrix and covers the surface with an antifouling substance to suppress the adhesion of aquatic organisms to the surface of the silicone resin, and the agent is nonhydrolyzable.

When the antifouling layer contains the antifouling agent, the content of the antifouling agent in the antifouling layer with respect to the silicone resin is preferably 2 wt% or more, more preferably from 2 wt% to 200 wt%, still more preferably from 3 wt% to 150 wt%, particularly preferably from 4 wt% to 120 wt%, most preferably from 5 wt% to 100 wt%. When the content of the antifouling agent with respect to the silicone resin is less than 2 wt%, the antifouling layer may be unable to sufficiently express its antifouling effect. When the content of the antifouling agent with respect to the silicone resin exceeds 200 wt%, the external appearance of a final molded article or coating film may be unsatisfactory, and the antifouling layer may be reduced in strength to be unable to maintain its antifouling property.

Any appropriate antifouling agent may be adopted as the antifouling agent to the extent that the effect of the present invention is not impaired. Examples of such antifouling agent include a silicone oil, a liquid paraffin, a surfactant, a wax, petrolatum, animal fats, and a fatty acid. In the present invention, the antifouling agent is preferably at least one kind selected from the silicone oil, the liquid paraffin, and the surfactant.

The silicone oil is preferably free of reactivity with the silicone resin or self-condensability. Any appropriate silicone oil may be adopted as such silicone oil to the extent that the effect of the present invention is not impaired. Such silicone oil is preferably incompatible with an organopolysiloxane in the silicone resin to some extent, and is preferably, for example, a silicone oil represented by the general formula (I) because the antifouling effect can be maintained over a long time period.

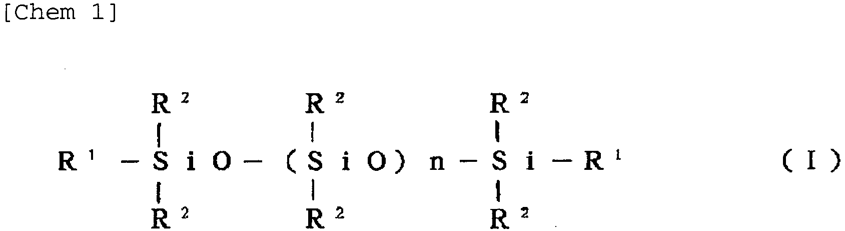

In the general formula (I), R¹'s maybe identical to or different from each other, and each represent an alkyl group having 1 to 10 carbon atoms, an aryl group, an aralkyl group, a fluoroalkyl group, a polyether group, or a hydroxyl group, R²'s may be identical to or different from one another, and each represent an alkyl group having 1 to 10 carbon atoms, an aryl group, an aralkyl group, a polyether group, or a fluoroalkyl group, and n represents an integer of from 0 to 150.

R¹'s in the general formula (I) each preferably represent a methyl group, a phenyl group, or a hydroxyl group. R²'s in the general formula (I) each preferably represent a methyl group, a phenyl group, or a 4-trifluorobutyl group.

The silicone oil represented by the general formula (I) has a number-average molecular weight of preferably from 180 to 20, 000, more preferably from 1,000 to 10,000.

The silicone oil represented by the general formula (I) has a viscosity of preferably from 10 centistokes to 10,000 centistokes, more preferably from 100 centistokes to 5,000 centistokes.

Specific examples of the silicone oil represented by the general formula (I) include: a terminal hydroxyl group-containing dimethyl silicone oil in which R¹ at each of both terminals or one terminal represents a hydroxyl group; a dimethyl silicone oil in which all of R¹'s and R²'s each represent a methyl group; and a phenyl methyl silicone oil obtained by substituting part of the methyl groups of any such dimethyl silicone oil with phenyl groups.

As a commercial product of the silicone oil represented by the general formula (I), there are given, for example: KF96L, KF96, KF69, KF99, KF50, KF54, KF410, KF412, KF414, and FL manufactured by Shin-Etsu Chemical Co. , Ltd; and BY16-846, SF8416, SH2 03, SH230, SF8419, FS1265, SH510, SH550, SH710, FZ-2110, and FZ-2203 manufactured by Dow Corning Toray Co., Ltd.

Examples of the surfactant include an anionic surfactant, a cationic surfactant, and a nonionic surfactant.

A diatom adhesion-preventing agent, an agricultural chemical, a drug (such as medetomidine), an enzyme activity inhibitor (such as an alkylphenol or an alkylresorcinol), or an organism repellent may be used as the antifouling agent. The use of any such antifouling agent additionally improves a preventing effect on the adhesion of an aquatic organism such as a diatom or a barnacle.

The antifouling layer may contain any appropriate other additive to the extent that the effect of the present invention is not impaired.

Any appropriate thickness may be adopted as the thickness of the antifouling layer depending on, for example, the applications and use environment of the pressure-sensitive adhesive tape for preventing adhesion of aquatic organisms of the present invention. The thickness of the antifouling layer is preferably from 5 µm to 500 µm. When the thickness of the antifouling layer is less than 5 µm, the layer may not be practical because the time period for which its antifouling effect effectively works shortens. When the thickness of the antifouling layer is more than 500 µm, the pressure-sensitive adhesive tape for preventing adhesion of aquatic organisms of the present invention becomes thick and increases in weight. Accordingly, there is a risk that its handleability deteriorates, unevenness at a joint portion of the tape enlarges, and dirt is liable to adhere.

Any appropriate pressure-sensitive adhesive layer may be adopted as the pressure-sensitive adhesive layer to the extent that the effect of the present invention is not impaired. A material for such pressure-sensitive adhesive layer is, for example, an acrylic resin-based pressure-sensitive adhesive, an epoxy resin-based pressure-sensitive adhesive, an amino resin-based pressure-sensitive adhesive, a vinyl resin (e.g., vinyl acetate-based polymer)-based pressure-sensitive adhesive, a curable acrylic resin-based pressure-sensitive adhesive, or a silicone resin-based pressure-sensitive adhesive. The number of kinds of the materials for the pressure-sensitive adhesive layer may be only one, or may be two or more.

Any appropriate thickness may be adopted as the thickness of the pressure-sensitive adhesive layer depending on, for example, the applications and use environment of the pressure-sensitive adhesive tape for preventing adhesion of aquatic organisms of the present invention. The thickness of the pressure-sensitive adhesive layer is preferably 10 µm or more. When the thickness of the pressure-sensitive adhesive layer is less than 10 µm, there is a risk that the layer cannot sufficiently follow the shape of an adherend, its adhesion area reduces, and the layer cannot express sufficient adhesion. An upper limit for the thickness of the pressure-sensitive adhesive layer is preferably 300 µm or less from the viewpoint of handleability.

The pressure-sensitive adhesive tape for preventing adhesion of aquatic organisms of the present invention may be produced by any appropriate method. Examples of such method include: a method involving attaching the separately prepared base material layer and pressure-sensitive adhesive layer to each other, and then applying an antifouling layer formation material onto the base material layer to form the antifouling layer; a method involving applying a pressure-sensitive adhesive layer formation material onto one surface of the base material layer to form the pressure-sensitive adhesive layer, and applying the antifouling layer formation material onto the other surface of the base material layer to form the antifouling layer; and a method involving coextruding a base material layer formation material and the pressure-sensitive adhesive layer formation material to form a laminate of the base material layer and the pressure-sensitive adhesive layer, and then applying the antifouling layer formation material onto the base material layer to form the antifouling layer.

A method of applying the antifouling layer formation material onto the base material layer is, for example, a spray, brush application, a roller, a curtain flow, a roll, or dipping. The antifouling layer can be formed by applying the antifouling layer formation material onto the base material layer according to any such method and drying the material at, for example, a temperature ranging from room temperature to 250°C (preferably a temperature ranging from room temperature to 180°C).

### Examples

The present invention is specifically described below by way of Examples. However, the present invention is not limited thereto.

### <Measurement of impact absorption rate>

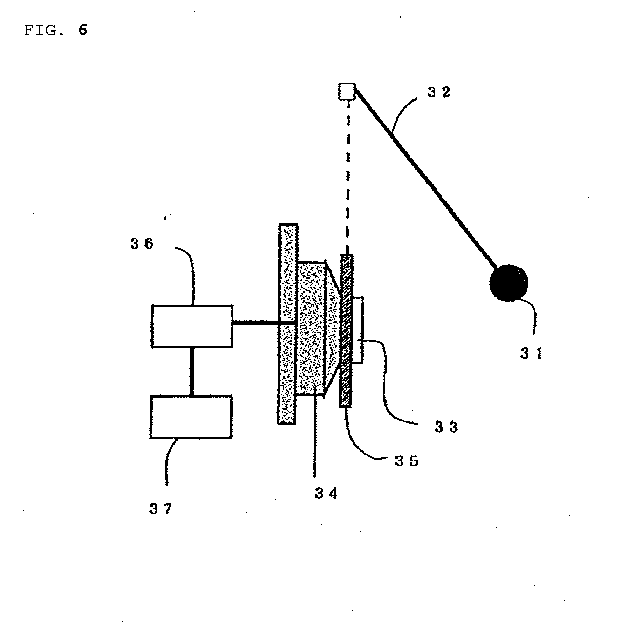

An impact force was measured with such a pendulum tester as illustrated in FIG. 6. A pendulum tester 30 was produced by providing an impactor 31 formed of a steel ball having a diameter of 19 mm and a weight of 28 gram weight (0.27 N) with a supporting rod 32 having a length of 350 mm. Reference numerals 34, 35, 36, and 37 represent a force sensor (manufactured by TOYO Corporation), an aluminum plate, a power source, and a Multi-Purpose FTT Analyzer (manufactured by Ono Sokki Co., Ltd.), respectively. A square 20 mm on a side was cut out of an impact absorption sheet produced in each of Examples and Comparative Examples, and was defined as a test piece 33. The test piece was bonded to the aluminum plate 35 by using its pressure-sensitive adhesive surface, and an impact force upon collision of the steel ball 31 was sensed with the force sensor 34 and measured with the Multi-Purpose FTT Analyzer (manufactured by Ono Sokki Co. , Ltd.) 37. It should be noted that the velocity of the impactor 31 immediately before its collision with the impact absorption sheet 33 was measured with a linear motion speedometer ST-1210 (manufactured by Ono Sokki Co., Ltd.) and a sensor FU-77G (manufactured by KEYENCE CORPORATION).

An impact force with respect to an FRP plate was measured and defined as F₀ (N).

Next, a base material and the FRP plate were bonded to each other with a pressure-sensitive adhesive, followed by the measurement of an impact force. The force was defined as F (N).

An impact absorption rate was calculated from the following equation.

### Impact absorption rate (%)=[(F₀-F)/F]×100

### <Iron ball drop test>

A tape to be tested was sampled into a size measuring 3 cm by 3 cm, and the sample was bonded and fixed to an acrylic plate measuring 5 cm by 5 cm by 1 cm. A 100-g iron ball (having a diameter of 3 cm) was dropped from a height of 1 m onto the antifouling layer side of the tape on the acrylic plate and the state of its antifouling layer was observed.

### [Example 1]

### (Pressure-sensitive adhesive layer)

90 Parts byweight of 2-ethylhexyl acrylate (2EHA, manufactured by TOAGOSEI CO., LTD.) and 10 parts by weight of acrylic acid (AA) as (meth)acrylic monomers, and 0.1 part by weight of 2,2-dimethoxy-1,2-diphenylethan-1-one (trade name: "IRGACURE 651, " manufactured by BASF) as a photopolymerization initiator were loaded into a reaction vessel provided with a cooling tube, a nitrogen-introducing tube, a temperature gauge, and a stirring machine, and were dispersed. While the dispersion was stirred, UV light was applied from an upper portion in a stream of nitrogen to convert part of the monomers into a polymer, thereby adjusting the viscosity of the dispersion so that the dispersion could be applied. Thus, a (meth) acrylic monomer mixture was obtained. 0.08 Part by weight of 1,6-hexanediol diacrylate (HDDA) was added as a cross-linking agent to the (meth)acrylic monomer mixture, the mixture was applied to the surface of a separator (tradename: "MRF38," manufactured by Mitsubishi Plastics, Inc., thickness: 50 µm) with an applicator, a cover separator (trade name: "MRF3 8 , " manufactured by Mitsubishi Plastics, Inc., thickness: 38 µm) was attached to the mixture with a hand roller, and the resultant was irradiated with UV light from a UV lamp (BL type) (UV irradiance: 3.4 mW/cm², cumulative dose: 2,000 mJ/cm²) to provide a pressure-sensitive adhesive layer (1-A) having a thickness of 50 µm.

### (Base material layer)

71 Parts by weight of isobornyl acrylate (trade name: " IBXA, " manufactured by Osaka Organic Chemical Industry Ltd.), 19 parts by weight of n-butyl acrylate (BA, manufactured by TOAGOSEI CO., LTD.), and 10 parts by weight of acrylic acid (AA) as (meth) acrylic monomers, 68.4 parts by weight of poly(oxytetramethylene) glycol having a number-average molecular weight of 650 (PTMG650, manufactured by Mitsubishi Chemical Corporation) as a polyol, and 0.01 part by weight of dibutyltin dilaurate (DBTL) as a catalyst were loaded into a reaction vessel provided with a cooling tube, a temperature gauge, and a stirring device. While the mixture was stirred, 25.5 parts by weight of hydrogenated xylylene diisocyanate (HXDI, manufactured by Mitsui Chemical Polyurethane) were dropped to the mixture, followed by a reaction at 65°C for 5 hours. Thus, a urethane polymer-(meth)acrylic monomer mixture was obtained. After that, 6.1 parts by weight of hydroxyethyl acrylate (trade name: "ACRYX HEA, " manufactured by TOAGOSEI CO., LTD.) were loaded into the mixture, and the whole was subjected to a reaction at 65°C for 1 hour to provide an acryloyl group-terminated urethane polymer-(meth)acrylic monomer mixture.

1 Part by weight of 3-acryloxypropyl trimethoxysilane (KBM-5103, manufactured by Shin-Etsu Chemical Co., Ltd.), 5 parts by weight of trimethylolpropane triacrylate (TMPTA), 0.25 part by weight of diphenyl(2,4,6-trimethoxybenzoyl)phosphine oxide (trade name: "Lucirin TPO," manufactured by BASF) as a photopolymerization initiator, 1.25 parts by weight of a UV absorbing agent (trade name: "TINUVIN 123," manufactured by BASF), and 0.6 part by weight of an antioxidizing agent (trade name: "TINUVIN 400," manufactured by BASF) were added to the resultant acryloyl group-terminated urethane polymer- (meth) acrylic monomer mixture to provide a syrup.

The resultant syrup was applied to the surface of a separator (trade name: "MRF38," manufactured by Mitsubishi Plastics, Inc., thickness: 38 µm) with an applicator to form a syrup layer having a thickness of 150 µm. A cover separator (trade name: "MRF38," manufactured by Mitsubishi Plastics, Inc., thickness: 38 µm) was attached onto the syrup layer with a hand roller, and the resultant was irradiated with UV light from a UV lamp (BL type) (UV irradiance: 3.4 mW/cm², cumulative dose: 2 , 000 mJ/cm²) to provide a base material layer (1-B).

The base material layer (1-B) had an impact absorption rate of 25%.

### (Pressure-sensitive adhesive tape)

The resultant pressure-sensitive adhesive layer (1-A) andbase material layer (1-B) were bonded to each other with a hand roller to provide a tape. Then, a silicone elastomer (BIOCLEAN DK manufactured by CHUGOKU MARINE PAINTS, LTD.) was applied onto the base material layer (1-B) of the tape with an applicator to form a syrup layer having a thickness of 150 µm. The resultant was cured at 150°C for 10 minutes to produce a pressure-sensitive adhesive tape (1).

The construction of the pressure-sensitive adhesive tape (1) was as follows: an antifouling layer (thickness=150 µm), the base material layer (thickness=150 µm), and the pressure-sensitive adhesive layer (thickness=50 µm).

Table 1 shows the results of its evaluations.

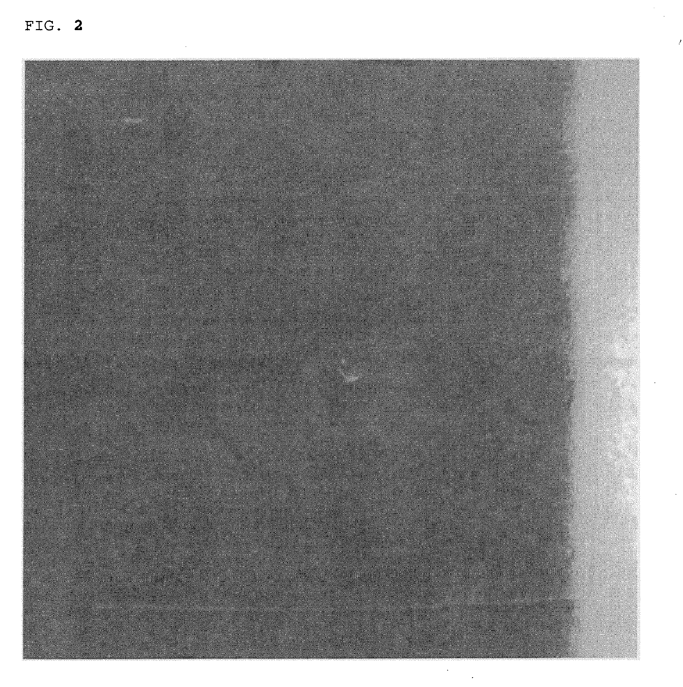

In addition, FIG. 2 shows a photographic view showing a state of the pressure-sensitive adhesive tape (1) after the iron ball drop test.

### [Example 2]

### (Pressure-sensitive adhesive layer)

A pressure-sensitive adhesive layer (2-A) having a thickness of 50 µm was obtained in the same manner as in Example 1.

### (Base material layer)

80 Parts by weight of isobornyl acrylate (trade name: "IBXA, " manufactured by Osaka Organic Chemical Industry Ltd.) and 20 parts by weight of n-butyl acrylate (BA, manufactured by TOAGOSEI CO., LTD.) as (meth)acrylic monomers, 68.4 parts by weight of poly(oxytetramethylene) glycol having a number-average molecular weight of 650 (PTMG650, manufactured by Mitsubishi Chemical Corporation) asapolyol, and 2 parts byweight of dibutyltindilaurate (DBTL) as a catalyst were loaded into a reaction vessel provided with a cooling tube, a temperature gauge, and a stirring device. While the mixture was stirred, 25.5 parts by weight of hydrogenated xylylene diisocyanate (HXDI, manufactured by Mitsui Chemical Polyurethane) were dropped to the mixture, followed by a reaction at 65°C for 5 hours. Thus, a urethane polymer-(meth) acrylic monomer mixture was obtained. After that, 6.1 parts by weight of hydroxyethyl acrylate (trade name: "ACRYX HEA," manufactured by TOAGOSEI CO., LTD.) were loaded into the mixture, and the whole was subjected to a reaction at 65°C for 1 hour to provide an acryloyl group-terminated urethane polymer-(meth)acrylic monomer mixture.

1 Part by weight of 3-acryloxypropyl trimethoxysilane (KBM-5103, manufactured by Shin-Etsu Chemical Co., Ltd.), 1 part byweight of acrylic acid (AA), 5 parts by weight of trimethylolpropane triacrylate (TMPTA), 0.25 part by weight of diphenyl(2,4,6-trimethoxybenzoyl)phosphine oxide (trade name: "Lucirin TPO," manufactured by BASF) as a photopolymerization initiator, 1.25 parts by weight of a UV absorbing agent (trade name: "TINUVIN 123," manufactured by BASF), and 0.6 part by weight of an antioxidizing agent (trade name: "TINUVIN 400," manufactured by BASF) were added to the resultant acryloyl group-terminated urethane polymer- (meth) acrylic monomer mixture to provide a syrup.

The resultant syrup was applied to the surface of a separator (trade name: "MRF38," manufactured by Mitsubishi Plastics, Inc., thickness: 38 µm) with an applicator to form a syrup layer having a thickness of 150 µm. A cover separator (trade name: "MRF38," manufactured by Mitsubishi Plastics, Inc., thickness: 38 µm) was attached onto the syrup layer with a hand roller, and the resultant was irradiated with UV light from a UV lamp (BL type) (UV irradiance: 3.4 mW/cm², cumulative dose: 2, 000 mJ/cm²) to provide a base material layer (2-B).

The base material layer (2-B) had an impact absorption rate of 15%.

### (Pressure-sensitive adhesive tape)

The resultant pressure-sensitive adhesive layer (2-A) and base material layer (2-B) were bonded to each other with a hand roller to provide a tape. Then, a silicone elastomer (BIOCLEAN DK manufactured by CHUGOKU MARINE PAINTS, LTD.) was applied onto the base material layer (2-B) of the tape with an applicator to form a syrup layer having a thickness of 150 µm. The resultant was cured at 150°C for 10 minutes to produce a pressure-sensitive adhesive tape (2).

The construction of the pressure-sensitive adhesive tape (2) was as follows: an antifouling layer (thickness=150 µm), the base material layer (thickness=150 µm), and the pressure-sensitive adhesive layer (thickness=50 µm).

Table 1 shows the results of its evaluations.

### [Example 3]

### (Pressure-sensitive adhesive layer)

A pressure-sensitive adhesive layer (3-A) having a thickness of 50 µm was obtained in the same manner as in Example 1.

### (Base material layer)

A pellet-type hydrogenated styrene-based thermoplastic elastomer (SEBS, manufactured by Kraton Performance Polymers, Inc., G1652) was uniformly dissolved in a toluene solution to provide a syrup.

The resultant syrup was applied to the surface of a separator (trade name: "MRF38," manufactured by Mitsubishi Plastics, Inc., thickness: 38 µm) with an applicator to form a syrup layer having a thickness of 250 µm. After that, the toluene solution was evaporated at 150°C for 10 minutes to provide a base material layer (3-B) having a thickness of 150 µm.

The base material layer (3-B) had an impact absorption rate of 15%.

### (Pressure-sensitive adhesive tape)

The resultant pressure-sensitive adhesive layer (3-A) andbase material layer (3-B) were bonded to each other with a hand roller to provide a tape. Then, a silicone elastomer (BIOCLEAN DK manufactured by CHUGOKU MARINE PAINTS, LTD.) was applied onto the base material layer (3-B) of the tape with an applicator to form a syrup layer having a thickness of 150 µm. The resultant was cured at 150°C for 10 minutes to produce a pressure-sensitive adhesive tape (3).

The construction of the pressure-sensitive adhesive tape (3) was as follows: an antifouling layer (thickness=150 µm), the base material layer (thickness=150 µm), and the pressure-sensitive adhesive layer (thickness=50 µm).

Table 1 shows the results of its evaluations.

### [Example 4]

### (Pressure-sensitive adhesive layer)

A pressure-sensitive adhesive layer (4-A) having a thickness of 50 µm was obtained in the same manner as in Example 1.

### (Base material layer)

Ether urethane (product name: "EST-001," thickness: 150 µm, manufactured by Fait Plast) was used as a base material layer (4-B).

The base material layer (4-B) had an impact absorption rate of 14%.

### (Pressure-sensitive adhesive tape)

The resultant pressure-sensitive adhesive layer (4-A) andbase material layer (4-B) were bonded to each other with a hand roller to provide a tape. Then, a silicone elastomer (BIOCLEAN DK manufactured by CHUGOKU MARINE PAINTS, LTD.) was applied onto the base material layer (4-B) of the tape with an applicator to form a syrup layer having a thickness of 150 µm. The resultant was cured at 150°C for 10 minutes to produce a pressure-sensitive adhesive tape (4).

The construction of the pressure-sensitive adhesive tape (4) was as follows: an antifouling layer (thickness=150 µm), the base material layer (thickness=150 µm), and the pressure-sensitive adhesive layer (thickness=50 µm).

Table 1 shows the results of its evaluations.

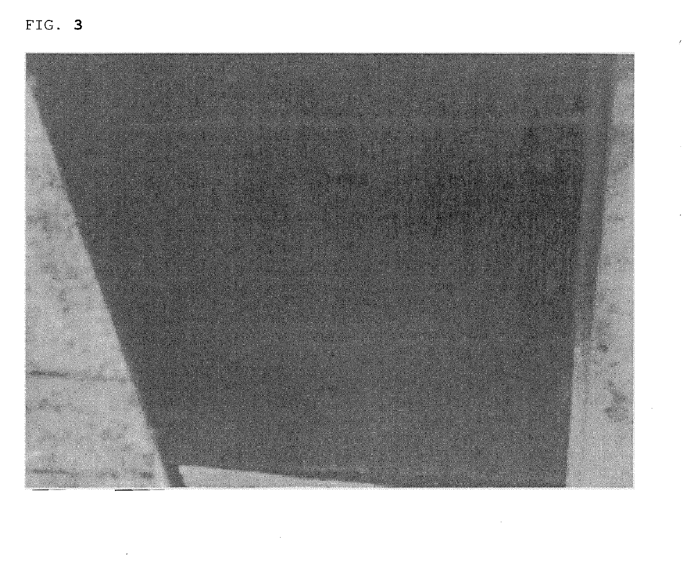

In addition, FIG. 3 shows a photographic view showing a state of the pressure-sensitive adhesive tape (4) after the iron ball drop test.

### [Comparative Example 1]

### (Pressure-sensitive adhesive layer)

A pressure-sensitive adhesive layer (C1-A) having a thickness of 50 µm was obtained in the same manner as in Example 1.

### (Base material layer)

A brass plate (thickness: 400 µm) was used as a base material layer (C1-B).

The base material layer (C1-B) had an impact absorption rate of 8%.

### (Pressure-sensitive adhesive tape)

The resultant pressure-sensitive adhesive layer (C1-A) and base material layer (C1-B) were bonded to each other with a hand roller to provide a tape. Then, a silicone elastomer (BIOCLEAN DK manufactured by CHUGOKU MARINE PAINTS, LTD.) was applied onto the base material layer (C1-B) of the tape with an applicator to form a syrup layer having a thickness of 150 µm. The resultant was cured at 150°C for 10 minutes to produce a pressure-sensitive adhesive tape (C1).

The construction of the pressure-sensitive adhesive tape (C1) was as follows: an antifouling layer (thickness=150 µm), the base material layer (thickness=400 µm), and the pressure-sensitive adhesive layer (thickness=50 µm).

Table 1 shows the results of its evaluations.

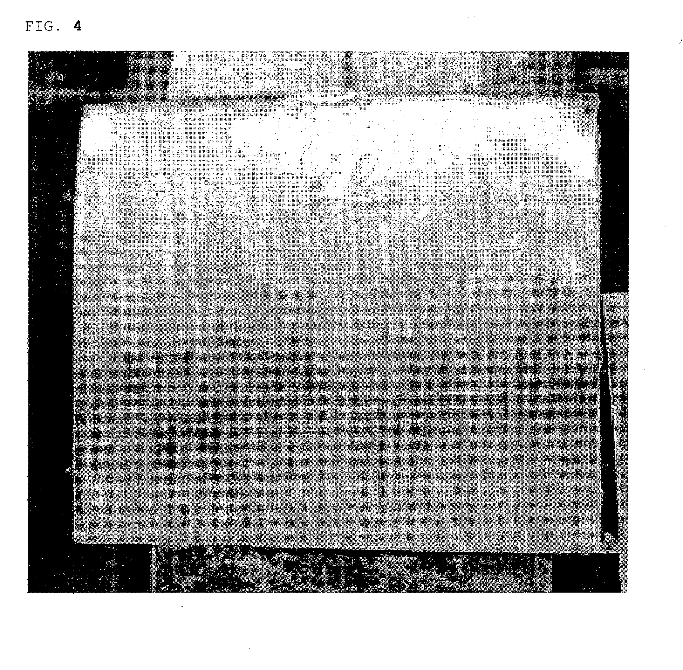

In addition, FIG. 4 shows a photographic view showing a state of the pressure-sensitive adhesive tape (C1) after the iron ball drop test.

### [Comparative Example 2]

### (Pressure-sensitive adhesive layer)

A pressure-sensitive adhesive layer (C2-A) having a thickness of 50 µm was obtained in the same manner as in Example 1.

### (Base material layer)

A polyester plate (90790-G1773, thickness: 500 µm, manufactured by YAMAHA) was used as a base material layer (C2-B).

The base material layer (C2-B) had an impact absorption rate of 5%.

### (Pressure-sensitive adhesive tape)

The resultant pressure-sensitive adhesive layer (C2-A) and base material layer (C2-B) were bonded to each other with a hand roller to provide a tape. Then, a silicone elastomer (BIOCLEAN DK manufactured by CHUGOKU MARINE PAINTS, LTD.) was applied onto the base material layer (C2-B) of the tape with an applicator to form a syrup layer having a thickness of 150 µm. The resultant was cured at 150°C for 10 minutes to produce a pressure-sensitive adhesive tape (C2).

The construction of the pressure-sensitive adhesive tape (C2) was as follows: an antifouling layer (thickness=150 µm), the base material layer (thickness=500 µm), and the pressure-sensitive adhesive layer (thickness=50 µm).

Table 1 shows the results of its evaluations.

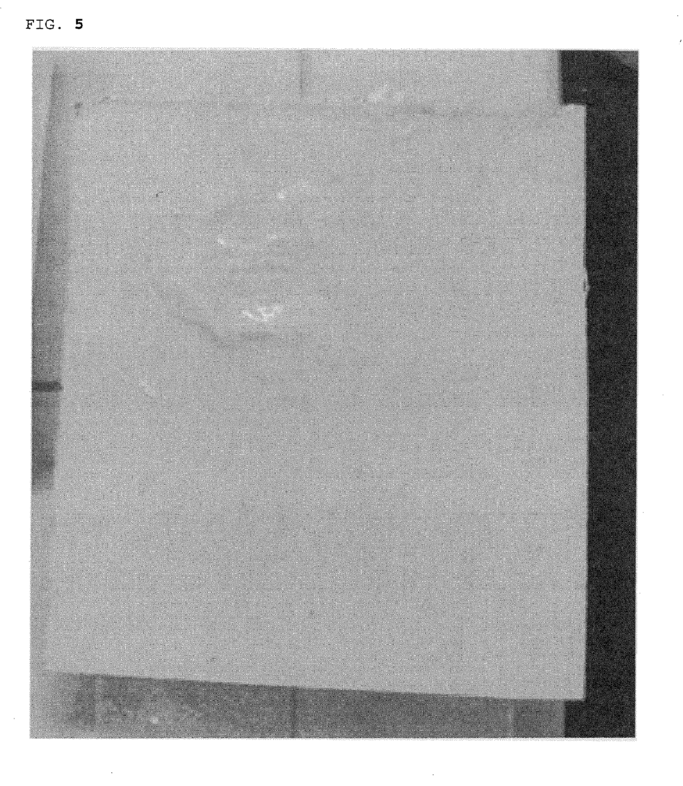

In addition, FIG. 5 shows a photographic view showing a state of the pressure-sensitive adhesive tape (C2) after the iron ball drop test.

**[Table 1]**

| | Impact absorption rate (%) | Iron ball drop test |
|---|---|---|
| Example 1 | 25 | No change |
| Example 2 | 15 | No change |
| Example 3 | 15 | No change |
| Example 4 | 14 | No change |
| Comparative Example 1 | 8 | Damage or loss |
| Comparative Example 2 | 5 | Damage or loss |

### Industrial Applicability

The pressure-sensitive adhesive tape for preventing adhesion of aquatic organisms of the present invention can be suitably utilized in an underwater structure (such as a ship, a buoy, a harbor facility, a maritime oil field facility, a waterway for power plant cooling water, a waterway for factory cooling water, or a water floating passage) because the tape can prevent aquatic organisms from adhering to the structure to proliferate.

### Reference Signs List

1 release film
2 antifouling layer
3 base material layer
4 pressure-sensitive adhesive layer
100 pressure-sensitive adhesive tape for preventing adhesion of aquatic organisms

## Claims

1. A pressure-sensitive adhesive tape for preventing adhesion of aquatic organisms, comprising an antifouling layer, a base material layer, andapressure-sensitive adhesive layer in the stated order, wherein the base material layer has an impact absorption rate of 10% or more.

2. A pressure-sensitive adhesive tape for preventing adhesion of aquatic organisms according to claim 1, wherein the base material layer contains an elastomer resin.

3. A pressure-sensitive adhesive tape for preventing adhesion of aquatic organisms according to claim 2, wherein the elastomer resin comprises at least one kind selected from a urethane-based elastomer and a styrene-based elastomer.

4. A pressure-sensitive adhesive tape for preventing adhesion of aquatic organisms according to any one of claims 1 to 3 , wherein the antifouling layer contains a silicone resin.
